(19) Europäisches Patentamt
European Patent Office
Office européen des brevets

(11)  **EP 1 577 665 B1**

(12)  **EUROPEAN PATENT SPECIFICATION**

(45) Date of publication and mention
of the grant of the patent:
**26.06.2013  Bulletin 2013/26**

(51) Int Cl.:
***G01N 27/327*** *(2006.01)*   ***C12M 1/34*** *(2006.01)*

(21) Application number: **03780809.4**

(86) International application number:
**PCT/JP2003/016132**

(22) Date of filing: **16.12.2003**

(87) International publication number:
**WO 2004/061444 (22.07.2004 Gazette 2004/30)**

(54) **Thin analyzing test strip**

Dünner Teststreifen

Bandalette de test mince

(84) Designated Contracting States:
**AT BE BG CH CY CZ DE DK EE ES FI FR GB GR HU IE IT LI LU MC NL PT RO SE SI SK TR**

(30) Priority: **20.12.2002  JP 2002370930**

(43) Date of publication of application:
**21.09.2005  Bulletin 2005/38**

(73) Proprietor: **ARKRAY, Inc.**
**Kyoto-shi,**
**Kyoto 601-8045 (JP)**

(72) Inventor: **YAMAOKA, Hideaki,**
**c/o ARKRAY, Inc.**
**Kyoto-shi,**
**Kyoto 601-8045 (JP)**

(74) Representative: **MacDougall, Alan John Shaw et al**
**Mathys & Squire LLP**
**120 Holborn**
**London**
**EC1N 2SQ (GB)**

(56) References cited:
**EP-A1- 1 256 798        EP-A1- 1 522 592**
**EP-A1- 1 557 663        WO-A1-02/36779**
**JP-A- 2 231 558         JP-A- 9 509 740**
**JP-A- 11 094 790        JP-A- 2000 221 157**
**JP-A- 2002 195 972**

• **MORRIS N.A. ET AL: 'An electrochemical capillary fill device for the analysis of glucose incorporating glucose oxidase and ruthenium (III) hexamine as mediator' ELECTROANALYSIS vol. 4, no. 1, 1992, pages 1 - 9, XP002065769**

**Description**

TECHNICAL FIELD

The present invention relates to an analyzing device used in the analysis of the concentration of a specific component (such as glucose or cholesterol) in a sample liquid such as blood.

BACKGROUND ART

Monitoring their blood glucose level on a daily basis is very important to diabetes patients in order to manage their blood glucose. Since making frequent trips to a medical facility is so inconvenient, portable, easy-to-use blood glucose measurement devices small enough to fit in the palm of the hand are used so that patients can easily measure their blood glucose by themselves and can even conveniently measure their blood glucose while away from home. Blood glucose is measured with one of these blood glucose measurement devices by installing a glucose sensor, which provides an enzyme reaction site, in the blood glucose measurement device, and supplying blood (specimen) to this glucose sensor.

Many glucose sensors are designed to measure the glucose concentration in a simple blood glucose measurement device by utilizing an electrochemical process, typically amperometry or coulometry. A glucose sensor of this type comprises, for example, a pair of electrodes (working electrode and counter electrode), a reagent layer, and a capillary in which this reagent layer is housed.

When amperometry is employed, for example, the working electrode and counter electrode may either be lined up next to each other in the same plane or disposed to face one another, but when coulometry is employed, the working electrode and counter electrode are generally disposed to face each other. The reagent layer contains a redox enzyme and an electron mediator, with GOD commonly used as the redox enzyme, and potassium ferricyanide as the electron mediator. With a glucose sensor such as this, when the specimen is supplied to the reagent layer through the capillary, an oxidation reaction of glucose, for example, is catalyzed by the redox enzyme, while a reduction reaction of the electron mediator is catalyzed by this enzyme.

Blood is generally supplied to the glucose sensor as follows. The user makes an incision in the skin to produce blood, and this blood is introduced into the glucose sensor. With this method, it is preferable to sample as little blood as possible in order to make the blood sampling less of a burden to the user. Accordingly, various improvements have been studied in an effort to reduce the amount of specimen (see, for example, US Laid-Open Patent Application 2002/0092612).

US Laid-Open Patent Application 2002/0092612 discloses a glucose sensor in which the amount of sample is 1.5 $\mu$L or less and the measurement time is reduced to 10 seconds. With this glucose sensor, a cavity in which the working electrode, counter electrode, and reagent layer are disposed is formed between a substrate and a cover, with the distance between the substrate and cover being no more than 200 $\mu$m. The reagent layer of this glucose sensor is immobilized and rendered water-insoluble on the surface of the working electrode in a state of containing glucose oxidase and a ferricyanide, for example.

Nevertheless, with the glucose sensor disclosed in US Laid-Open Patent Application 2002/0092612, the reduction in measurement time can hardly be considered adequate, and there is still room for improvement in terms of measurement precision.

EP1256798 A1 discloses a glucose sensor having a reaction space defined by two substrates and a spacer, wherein the height of the spacer ranges from 50 to 300 $\mu$m, and wherein the electrodes are provided on the surface of the lower substrate.

Similar glucose sensors, with the electrodes provided on the surface of the lower substrate, are disclosed in intermediate documents EP1522592 A1 and EP1557663 A1, wherein the spacer that defines the reaction space may have a height of 33 or 44 $\mu$m, according to EP1522592 A1, or of 40 $\mu$m, according to EP1557663 A1.

DISCLOSURE OF THE INVENTION

It is an object of the present invention to be able to measure concentration precisely with a very small amount of sample liquid while still keeping the measurement time short.

As a result of diligent study aimed at achieving this object, the inventors arrived at the present invention upon finding that the configuration of the reagent layer is one of the reasons the measurement time could not be shortened with conventional glucose sensors.

Specifically, with the reagent layer of a conventional glucose sensor, because the reagent layer was immobilized on the surface of the working electrode, the reaction between the glucose and the glucose oxidase only occurred at the surface of the working electrode, so the reaction between the glucose and the glucose oxidase took a long time, and this increased the measurement time. One possible way to solve this problem is to configure the reagent layer so that it will readily dissolve in the sample liquid (blood). In this case, since an electron mediator is diffused in the sample liquid (blood), it is necessary to eliminate anything that would affect the diffusion of the electron mediator, such as the effect of the proportion of solid components in the sample liquid (such as blood cell components in blood), or the effect of the temperature of the sample liquid. Also, the dissolution time will be longer, and the measurement time will increase, when a compound such as a ferricyanide that has relatively low solubility in blood is used.

The inventors also learned that it is preferable to improve the following points in order to further increase measurement precision. First, when a compound such as a ferricyanide that has relatively low solubility in blood is used, there is the possibility that measurement precision will be adversely affected by variance in solubility. Also, since ferricyanides have poor storage stability and readily migrate to reductants during storage, there is the danger that measurement precision could decrease in this respect as well. Second, glucose oxidase has a relatively low reaction velocity with glucose (its Km (Michaelis constant) is large), so using glucose oxidase is undesirable for the purposes of shortening the measurement time.

The present invention was conceived in light of the above situation, and provides a thin analysis tool comprising a reaction space for holding a sample liquid. The reaction space is provided with a reagent portion that dissolves when the sample liquid is held in the reaction space. Part of the reaction space is defined by first and second surfaces facing each other, where the first and the second surfaces are spaced from each other by a facing distance that is no greater than 45 $\mu$m.

The thin analysis tool of the present invention comprises first and second plates facing each other and disposed apart from each other to define the reaction space. The first and second surfaces extend in a direction perpendicular to the thickness direction of the first and second plates.

The thin analysis tool of the present invention comprises a first electrode provided on the first plate, and a second electrode provided on the second plate so as to face the first electrode, the second electrode cooperating with the first electrode for applying voltage to the sample liquid. The facing distance is the minimum distance between the upper surface of the first electrode (corresponding to the first surface, for example) and the upper surface of the second electrode (corresponding to the first surface, for example).

The reaction space may, for example, be constituted such that the sample is moved by capillary force.

The reagent portion may, for example, include an electron mediator and a redox enzyme.

A ruthenium compound is preferably used as the electron mediator. The ruthenium compound can be one expressed by the following chemical formula (1).

$$[Ru(NH_3)_5X]^{n+} \quad \cdots (1)$$

In Chemical Formula 1, X is $NH_3$, a halogen ion, CN, pyridine, nicotinamide, or $H_2O$, but X is preferably $NH_3$ or a halogen ion. n+ in Chemical Formula 1 is the valence of an oxidized Ru(III) complex determined by the type of X.

When the component to be analyzed is glucose, it is preferable for the redox enzyme to be GDH with glucose dehydrogenation activity. The GDH is preferably GDH in which a cytochrome C is bonded to $\alpha$GDH (CyGDH). Examples of CyGDH and $\alpha$GDH are those disclosed in International Disclosure Pamphlet No. WO02/36779. The GDH is preferably one originating in microbes belonging to the genus Burkholderia, but GDH originating in microbes belonging to other genera and having the same FAD and cytochrome C as CyGDH and $\alpha$GDH can also be used. Examples of other genera include pathogenic Gram-negative microbes among the genera Ralstonia and Pseudomonas.

For example, $\alpha$GDH contains a GDH active protein (alpha sub unit) whose molecular weight is approximately 60 kDa as measured by SDS-polyacrylamide gel electrophoresis under reductive conditions, as a sub unit having glucose dehydrogenation activity. Meanwhile, CyGDH contains two sub units: an alpha sub unit and an electron transport protein (cytochrome C) whose molecular weight is approximately 43 kDa as measured by SDS-polyacrylamide gel electrophoresis under reductive conditions. $\alpha$GDH and CyGDH having other sub units besides an alpha sub unit and cytochrome C can also be used.

CyGDH can be obtained, for example, by purifying an enzyme externally secreted by a microbe belonging to *Burkholderia cepacia*, or by purifying an internal enzyme of this microbe. $\alpha$GDH can be obtained, for example, by forming a transformant into which has been transfected a gene that codes for $\alpha$GDH collected from a microbe belonging to *Burkholderia cepacia*, and purifying an enzyme externally secreted from this transformant, or purifying an internal enzyme of this transformant.

The microbe belonging to *Burkholderia cepacia* can be, for example, *Burkholderia cepacia* KS1 strain. This KS1 strain has been deposited under microorganism accession number FERM BP-7306 with the Patent Organism Depositary, National Institute of Advanced Industrial Science and Technology (Central 6, 1-1-1 Higashi, Tsukuba, Ibaraki 305-8566, Japan).

Examples of the sample liquid include blood, urine, saliva, a preparation thereof, and other such biochemical samples. Examples of the component to be analyzed include glucose, cholesterol, lactic acid, and ascorbic acid.

BRIEF DESCRIPTION OF THE DRAWINGS

FIG. 1 is an overall perspective view of a comparative example of a biosensor useful for understanding the present invention;

FIG. 2 is a sectional view taken along the II-II line in FIG. 1;

FIG. 3 is an exploded perspective view of the biosensor shown in FIG. 1;

FIG. 4 illustrates the state when the biosensor shown in FIGS. 1 to 3 is mounted in a concentration measurement device, with the biosensor shown in plan view, and the concentration measurement device as a block diagram;

FIG. 5A and 5B illustrate the action of the comparative example of the biosensor useful for understanding the invention, and are sectional views of the main components of the biosensor;

FIG. 6A is a sectional view illustrating another comparative example of a biosensor useful for understanding the invention;

FIG. 6B is a sectional view illustrating an example of a biosensor according to the present invention;

## BEST MODE FOR CARRYING OUT THE INVENTION

The best mode for carrying out the invention will now be described in specific terms through reference to the drawings. In these embodiments, the description will be of a glucose sensor constituted so as to measure blood glucose levels, but the present invention is not limited to the measurement of blood glucose, and can be applied to an analysis tool that analyzes other components of blood, or other sample liquids besides blood.

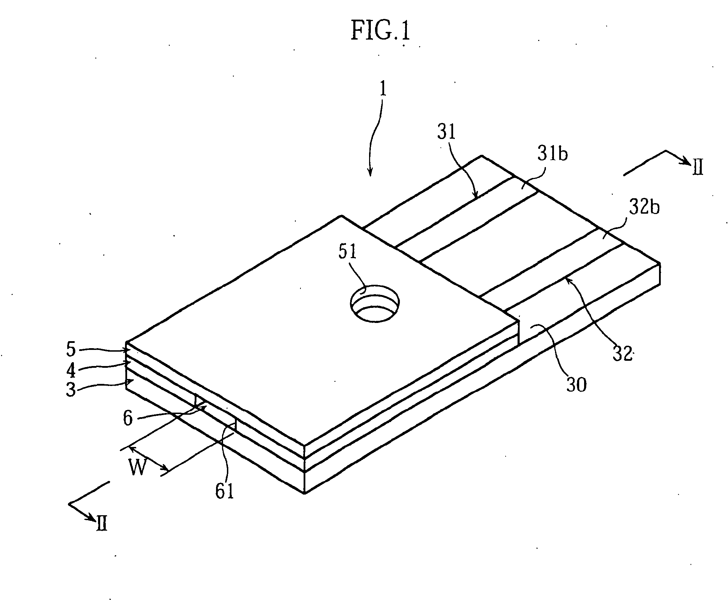

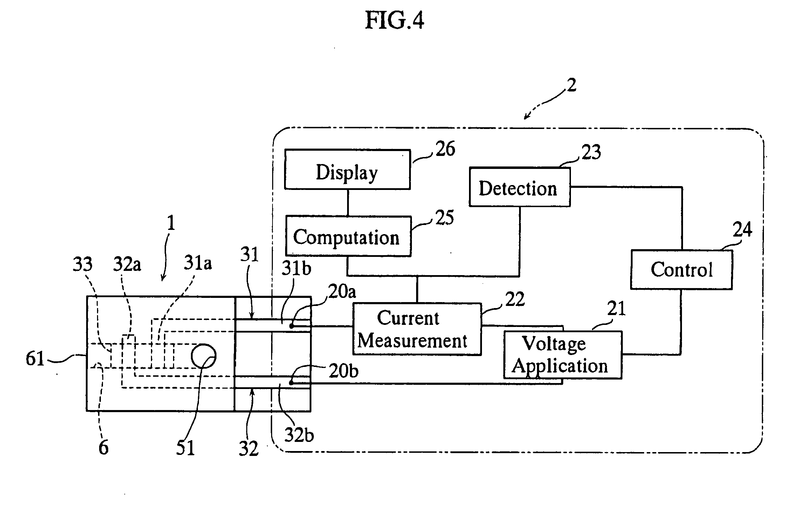

By way of a comparative example useful for understanding the invention, the glucose sensor 1 shown in FIGS. 1 to 3 is used by being installed in a concentration measurement device 2 (see FIG. 4), and comprises a cover 5 laid over a rectangular substrate 3 with a spacer 4 in between. In this glucose sensor 1, a reaction space 6 is defined by the various elements 3 to 5. This reaction space 6 is defined as a pillar-shaped space having a rectangular cross section, moves the sample liquid introduced through an opening (introduction port) 61 by capillary force, and is able to hold the introduced sample liquid.

The spacer 4 serves to define the height of the reaction space 6, that is, the distance from the upper surface 30 of the substrate 3 to the lower surface 5a of the cover 5. In this spacer 4 is formed a slit 41 that is open at its distal end. The slit 41 serves to define the width of the reaction space 6, and the open part at the distal end of the slit 41 serves to constitute the introduction port 61 used to introduce the sample liquid into the interior of the reaction space 6.

The cover 5 has a vent opening 51. The vent opening 51 is used to vent gases inside the reaction space 6 to the outside, and communicates with the interior of the reaction space 6. Therefore, when a sample liquid has been introduced through the introduction port 61 into the reaction space 6, the capillary force produced in the reaction space 6 causes the sample liquid to move through the inside the reaction space 6 toward the vent opening 51 formed in the cover 5.

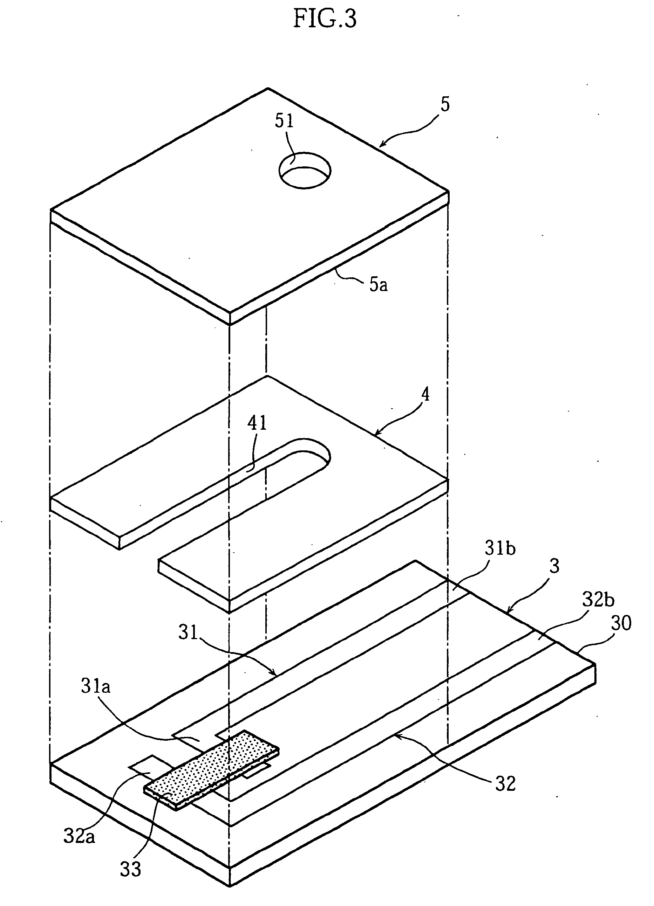

As shown more clearly in FIG. 3, a working electrode 31, a counter electrode 32, and a reagent portion 33 are formed on the upper surface 30 of the substrate 3. For the most part, the working electrode 31 and the counter electrode 32 extend in the lengthwise direction of the substrate 3. The ends 31a and 32a of the working electrode 31 and counter electrode 32 extend in the lateral direction of the substrate 3, and are lined up in the lengthwise direction. The ends 31b and 32b of the working electrode 31 and counter electrode 32, meanwhile, constitute terminals for contact with first and second terminals 20a and 20b (see FIG. 4) of the concentration measurement device 2 (discussed below).

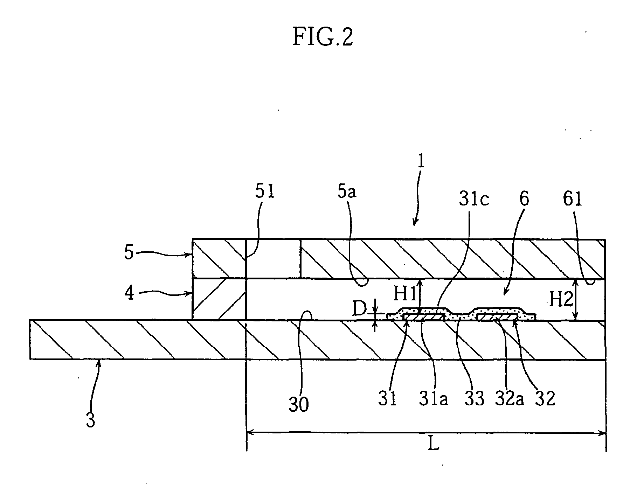

The working electrode 31 and the counter electrode 32 are formed, for example, by screen printing, plating, or sputtering in a thickness D (see FIG. 2) of 20 $\mu$m or less. The thickness D of the working electrode 31 and counter electrode 32 is preferably set to between 1 and 10 $\mu$m. The facing distance H1 (see FIG. 2) from the upper surface 31c of the working electrode 31 to the lower surface 5a of the cover 5 is set to 45 $\mu$m or less, and preferably to between 25 and 45 $\mu$m. This is because if the facing distance H1 is too large, as will be discussed below, the temperature or hematocrit value of the blood will tend to have an effect, but if the facing distance H1 is too small, the blood cannot be properly moved inside the reaction space 6.

The reagent portion 33 is formed, for example, as a solid containing a mediator (electron mediator) and a relatively small amount of redox enzyme, and as shown clearly in FIGS. 2 and 3, is provided so as to bridge the ends 31a and 32a of the working electrode 31 and counter electrode 32. This reagent portion 33 readily dissolves in blood. Therefore, when blood is introduced into the reaction space 6, a liquid phase reaction system is created including a mediator, a redox enzyme, and glucose. In this liquid phase reaction system, a glucose oxidation reaction and a mediator reduction reaction occur not only on the upper surface 31c of the working electrode 31, but over a wide range in the reaction space 6. Therefore, more glucose can be oxidized and in a shorter time than when a mediator or redox enzyme is immobilized on the surface of a working electrode. This means that the measurement can be completed in less time.

It is preferable to use a ruthenium compound as the mediator. A ruthenium complex is an example of a ruthenium compound. There are no particular restrictions on the type of ligands of the ruthenium complex as long as they function as an electron transport, but the complex is preferably contained in an oxidized state in the reagent portion 33. For instance, an oxidized compound expressed by the following chemical formula (2) can be used.

$$[Ru(NH_3)_5X]^{n+} \quad \cdots (2)$$

In Chemical Formula 2, X is $NH_3$, a halogen ion, CN, pyridine, nicotinamide, or $H_2O$, but X is preferably $NH_3$ or a halogen ion. n+ in Chemical Formula 2 is the valence of an oxidized Ru(III) complex determined by the type of X.

The ruthenium complex is usually present as an oxidized type (III) since the reductive type (II) is unstable. Accordingly, the mediator will not readily be reduced even if the reagent portion 33 of the glucose sensor 1 is exposed to light or water in a state in which a ruthenium complex is admixed. This means that any measurement error that would otherwise be caused by exposure of the mediator can be suppressed. Another characteristic of a ruthenium complex is that it does not readily crystallize, and favorably retains its micropowder form. Accordingly, if a ruthenium complex is used, there will be no deterioration in the solubility of the reagent portion 33 during storage. Another advantage regarding the combination of a ruthenium complex with αGDH or CyGDH is that the measurement time can be shortened because the electron transport rate of a ruthenium complex is high.

Meanwhile, it is preferable to use the above-mentioned αGDH or CyGDH as the redox enzyme. These enzymes have the advantage of a higher reaction velocity with glucose than glucose oxidase. This also affords a decrease in measurement time.

As shown in FIG. 4, the concentration measurement device 2 comprises the first and second terminals 20a and 20b, a voltage application portion 21, a current value measurement portion 22, a detection portion 23, a control portion 24, a computation portion 25, and a display portion 26.

The first and second terminals 20a and 20b serve to provide contact with the ends 31b and 32b of the working electrode 31 and counter electrode 32 in the glucose sensor 1 when the glucose sensor 1 has been installed in the concentration measurement device 2.

The voltage application portion 21 is utilized in the application of voltage between the working electrode 31 and the counter electrode 32 of the glucose sensor 1 via the first and second terminals 20a and 20b. A dry cell, chargeable cell, or other such DC power supply is used, for example, as the voltage application portion 21.

The current value measurement portion 22 is used to measure, as the response current value, the amount of electrons accepted between the working electrode 31 and the mediator during the application of voltage to the working electrode 31 and the counter electrode 32.

The detection portion 23 is used to confirm whether or not the sample liquid has been supplied to the reagent portion 33 (see FIGS. 1 to 3) on the basis of the current value measured by the current value measurement portion 22, after the glucose sensor 1 has been installed in the concentration measurement device 2.

The control portion 24 controls the voltage application portion 21 and selects whether voltage will be applied (closed circuit) or will not be applied (open circuit) between the working electrode 31 and the counter electrode 32.

The computation portion 25 is used to compute the glucose concentration according to the response current value measured by the current value measurement portion 22. The computation portion 25 is designed to be able to compute the glucose concentration by an amperometric method, for example. Using an amperometric method allows the concentration to be measured in less time than employing a coulometric method.

The detection portion 23, control portion 24, and computation portion 25 are each constituted by a CPU and a ROM, RAM, or other such memory, for example, but it is also possible for the detection portion 23, control portion 24, and computation portion 25 all to be constituted such that a plurality of memories are connected to a single CPU.

The display portion 26 is used to display the results of the computation by the computation portion 25, and to display that an error has occurred, the operating procedure, and so forth, and is constituted by a liquid crystal display device, for example.

The procedure by which glucose concentration is measured using the glucose sensor 1 and the concentration measurement device 2 will now be described.

As shown clearly in FIG. 4, first, the glucose sensor 1 is installed in the concentration measurement device 2. This brings the ends 31b and 32b of the working electrode 31 and counter electrode 32 into contact with the first and second terminals 20a and 20b of the concentration measurement device 2. In this state, it is possible to apply voltage between the working electrode 31 and counter electrode 32 via the first and second terminals 20a and 20b. In actual measurement, a constant voltage is applied between the working electrode 31 and counter electrode 32 from the point when the glucose sensor 1 is installed in the concentration measurement device 2. Since a ruthenium complex performs mediation at a low voltage, when a ruthenium complex is used, the constant voltage applied between the working electrode 31 and the counter electrode 32 is set to within a range of 100 to 500 mV, for example. In this comparative example useful for understanding the invention, the application of constant voltage between the working electrode 31 and the counter electrode 32 is performed continuously until the response current value is measured for the computation of the glucose concentration.

Next, blood is introduced through the introduction port 61 of the glucose sensor 1 into the reaction space 6. The blood proceeds by capillary force from the introduction port 61, toward the vent opening 51 formed in the cover 5, and into the reaction space 6. The blood dissolves the reagent portion 33 in the course of its movement.

Once blood has been supplied to the reagent portion 33, the glucose is oxidized by the redox enzyme into gluconolactone, and the mediator becomes reductive. Gluconolactone non-enzymatically becomes gluconic acid.

The reductive mediator moves to the end 31a side of the working electrode in a state in which a constant voltage has been applied to the working electrode 31 and the counter electrode 32 through the ends 31b and 32b of the working electrode 31 and counter electrode 32, then releases electrons to this end 31a and becomes an oxidative mediator.

Therefore, when a constant voltage has been applied between the working electrode 31 and the counter electrode 32 by the voltage application portion 21, the amount of electrons imparted from the reductive mediator is measured as the response current value by the current value measurement portion 22 via the working electrode 31 and the first terminal 20a. This response current value is a function of the amount of electrons originating in the reductive mediator that has moved through the reagent portion 33 under voltage application, and is called diffusion current.

Meanwhile, the response current value measured by the current value measurement portion 22 is monitored by the detection portion 23, and at the point when the response current value exceeds a certain threshold, the detection portion 23 detects that blood has been supplied to the reagent portion 33 and the reagent portion 33 has been dissolved. When the detection portion 23 detects the supply of blood, the detection portion 23 then decides whether or not a specific amount of time has elapsed since this detection.

When the detection portion 23 has decided that the specified time has elapsed, the current value measurement portion 22 measures the response current value, and the computation portion 25 computes the glucose concentration. The glucose concentration is computed by converting the response current value into a voltage value, and then plugging this voltage value into a previously produced calibration curve indicating the relation between voltage values and glucose concentrations. The computational result from the computation portion 25 is displayed on the display potion 26, for example.

The reductive mediator in contact with the working electrode 31 instantly becomes oxidative upon releasing its electrons to the working electrode 31, and even when the reductive mediator is a specific distance away from the working electrode 31, it will still release its electrons to the working electrode 31 and become oxidative. Hereinafter, the region in which the reductive mediator is able to release its electrons to the working electrode 31 will be referred to as the electron release region, and the region in which the reductive mediator is unable to release its electrons to the working electrode 31 will be referred to as the electron non-release region.

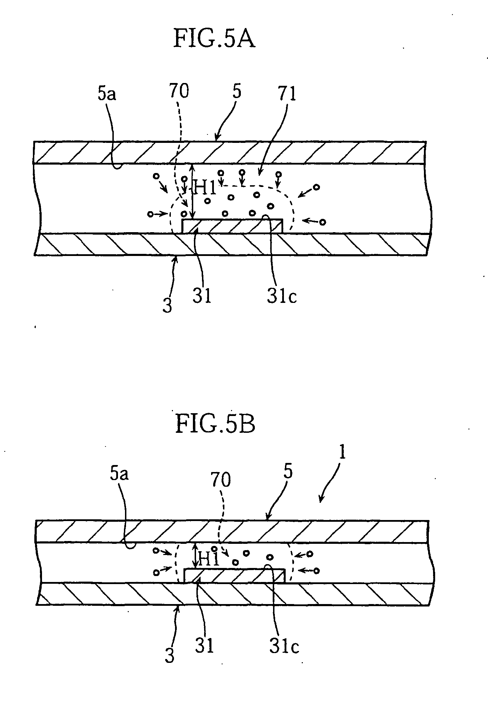

As can be surmised from the working examples given below, the distance from the surface of the working electrode in the electron release region is never less than 45 μm. Therefore, as shown in FIG. 5A, if the facing distance H1 from the upper surface 31c of the working electrode 31 to the lower surface 5a of the cover 5 is relatively large, such as when the facing distance H1 is at least 50 μm, the electron non-release region 71 will be above the electron release region 70 directly over the working electrode 31.

In contrast, when the facing distance H1 from the upper surface 31c of the working electrode 31 to the lower surface 5a of the cover 5 is set to be 45 μm or less, as with the glucose sensor 1 shown in FIG. 5B, the thickness of the portion of the electron release region 70 located directly over the working electrode 31 (hereinafter referred to simply as the "thickness of the electron release region 70") coincides with the facing distance H1, and this thickness of the electron release region 70 will be the same as or less than that shown in FIG. 5A.

Thus, the situation directly over the working electrode 31 is different when the facing distance H1 is large (see FIG. 5A) and when it is small (see FIG. 5B). As a result, as can be surmised from the working examples of the present invention given below, how much of the reductive mediator is consumed will vary with the facing distance H1.

Let us assume here that when no voltage is being applied, the concentration of the reductive mediator present in the electron release region (hereinafter referred to as the "non-diffused mediator") is the same as the concentration of the reductive mediator present in the electron non-release region (hereinafter referred to as the "diffused mediator").

In the case shown in FIG. 5A, when the facing distance H1 is large, the thickness of the electron release region 70 (the portion surrounded by the dotted line) is also large, so no all of the non-diffused mediator is oxidized when voltage is applied. Therefore, the non-diffused mediator is consumed a specific amount at a time, and this causes a difference in the concentration of the reductive mediator between the electron release region 70 and the electron non-release region 71. Consequently, the diffused mediator spreads out above and to the sides of the electron release region 70. After this, the oxidation of the reductive mediator present in the electron release region 70 occurs concurrently with the spreading of the diffused mediator with respect to the electron release region 70. Therefore, when the facing distance H1 is large, the process can be broadly divided into an early phase of consumption of the non-diffused mediator, a middle phase of consumption of the non-diffused mediator and the diffused mediator, and a late phase of consumption of the -diffused mediator.

The diffusion rate of the diffused mediator here is affected not only by the difference in the concentration of the reductive mediator between the electron release region 70 and the electron non-release region 71, but also by the temperature and movement resistance (blood hematocrit) of the diffusion medium (blood). Therefore, when the facing distance H1 is large, the effect of temperature and hematocrit value of the blood gradually increases over time.

In contrast, when the facing distance H1 is small (see FIG. 5B), because the electron release region 70 is not very thick, nearly all of the non-diffused mediator is consumed in the early phase, and then the diffusion and consumption of the diffused mediator occur in the electron release region. Therefore, when the facing distance H1 is small, the process can be broadly divided into an early phase of consumption of the non-diffused mediator, and a late phase of consumption of the diffused mediator. Therefore, when the facing distance H1 is small, there is a stage in which the temperature and hematocrit value of the blood have less effect, and a stage in which they have more effect.

When the facing distance H1 is the same as the thickness of the electron release region, the diffusion of the diffused mediator in the electron release region proceeds only from the sides of the electron release region. Accordingly, we can conclude that the diffusion rate of the diffused mediator and so forth have less effect on the measured current value when the facing distance H1 is small than when the facing distance H1 is larger than the thickness of the electron release region and the diffused mediator is diffused from the sides and from above the electron release region. The behavior of the diffused mediator has particularly little effect on the measured current value in the stage when the blood temperature and hematocrit value have less effect. Therefore, if the facing distance H1 is made about the same as or smaller than the thickness of the electron release region, the blood temperature and hematocrit value will have less effect and reproducibility will be good in a short time span from the start of voltage application (a shorter span of measurement time).

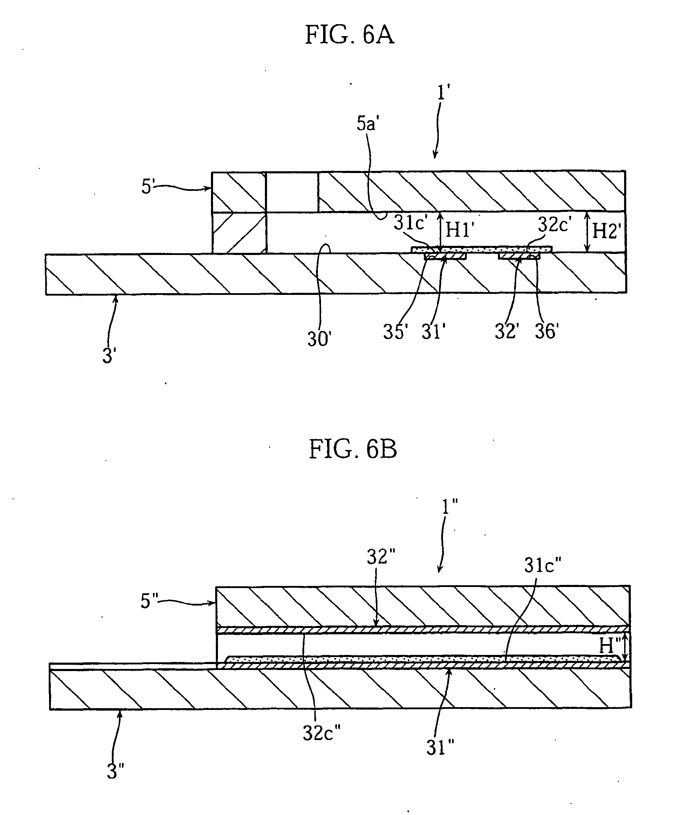

In a glucose sensor according to the present invention the working electrode 31 and the counter electrode 32 face at least partially the reaction space 6. For example, the configuration shown in FIG. 6B can be employed.

The glucose sensor 1' shown in FIG. 6A as a comparative example useful for understanding the invention comprises recesses 35' and 36' formed in a substrate 3', and a working electrode 31' and a counter electrode 32' embedded in these recesses 35' and 36'.

The upper surfaces 31c' and 32c' of the working electrode 31' and counter electrode 32' may or may not be in the same plane as the upper surface 30' of the substrate 3' (shown in the same plane in the drawings).

With this glucose sensor 1', the facing distance H1' is defined as the distance from the upper surface 31c' of the working electrode 31' to the lower surface 5a' of the cover 5', and when the upper surfaces 31c' and 32c' of the working electrode 31' and counter electrode 32' are in the same plane as the upper surface 30' of the substrate 3', the facing distance H1' coincides with the distance H2' between the substrate 3' and the cover 5'.

Meanwhile, the glucose sensor 1" shown in FIG. 6B, according to an embodiment of the invention, comprises a working electrode 31" formed on a substrate 3", and a counter electrode 32" formed on a cover 5". Naturally, the counter electrode may instead be formed on the substrate, and the working electrode on the cover.

With this glucose sensor 1", the facing distance H1" is defined as the distance between the upper surface 31c" of the working electrode 31" and the upper surface 32c" of the counter electrode 32".

The present invention is not limited to an analysis tool in which the height of the reaction space is defined by a spacer, and can also be applied to an analysis tool in which the cover is joined to a substrate in which is formed a recess that will serve as the reaction space.

## Claims

1. A thin analysis tool (1) comprising:

   a reaction space (6) for holding a sample liquid, wherein the reaction space (6) is provided with a reagent portion (33) that dissolves when the sample liquid is held in the space (6), and wherein part of the reaction space (6) is defined by first and second surfaces (31c, 5a) facing each other, the first and the second surfaces (31c, 5a) being spaced from each other by a facing distance (H1) that is no greater than 45 $\mu$m; first and second plates (3, 5) facing each other and disposed apart from each other to define the reaction space (6), wherein the first and second surfaces (31c, 5a) extend in a direction perpendicular to a thickness direction of the first and second plates (3, 5); and a first electrode (31") provided on the first plate (3"), and a second electrode (32") provided on the second plate (5") so as to face the first electrode (31"), the second electrode (32") cooperating with the first electrode (31") for applying voltage to the sample liquid, wherein the facing distance (H") is a minimum distance between the first electrode (31") and the second electrode (32").

2. The thin analysis tool (1) according to Claim 1, wherein the facing distance (H") is between 25 and 45 $\mu$m.

3. The thin analysis tool (1) according to Claim 1, wherein the reaction space (6) is constituted such that the sample is moved by capillary force.

4. The thin analysis tool (1) according to Claim 1, wherein the reagent portion (33) includes an electron mediator and a redox enzyme.

5. The thin analysis tool (1) according to Claim 4, wherein the electron mediator is a ruthenium compound.

6. The thin analysis tool (1) according to Claim 5, wherein the ruthenium compound is expressed by the following chemical formula (1):

$$[\mathrm{Ru(NH_3)_5X}]^{n+} \quad \cdots (1)$$

where X is $NH_3$, a halogen ion, CN, pyridine, nicotinamide, or $H_2O$ and n+ is the valence of an oxidized Ru(III) complex determined by a type of X.

7. The thin analysis tool (1) according to Claim 6, wherein X in Chemical Formula 1 is $NH_3$ or a halogen ion.

8. The thin analysis tool (1) according to Claim 4, wherein the redox enzyme has glucose dehydrogenation activity.

9. The thin analysis tool (1) according to Claim 8, wherein the redox enzyme is a glucose dehydrogenation enzyme originating in microbes belonging to genus Burkholderia.

10. The thin analysis tool (1) according to Claim 9, wherein the redox enzyme has an alpha sub-unit that has glucose dehydrogenation activity and whose molecular weight is approximately 60 kDa as measured by SDS-polyacrylamide gel electrophoresis under reductive conditions.

11. The thin analysis tool (1) according to Claim 10, wherein the redox enzyme has a cytochrome C whose molecular weight is approximately 43 kDa as measured by SDS-polyacrylamide gel electrophoresis under reductive conditions.

12. The thin analysis tool (1) according to Claim 4, wherein the electron mediator is a ruthenium compound, and
wherein the redox enzyme is a glucose dehydrogenation enzyme originating in microbes belonging to the genus Burkholderia.

13. The thin analysis tool (1) according to Claim 12, wherein the ruthenium compound is expressed by the following chemical formula (2),
wherein the redox enzyme includes: an alpha sub-unit that has glucose dehydrogenation activity and whose molecular weight is approximately 60 kDa as measured by SDS-polyacrylamide gel electrophoresis under reductive conditions; and a cytochrome C whose molecular weight is approximately 43 kDa as measured by SDS-polyacrylamide gel electrophoresis under reductive conditions;

$$[\mathrm{Ru(NH_3)_5X}]^{n+} \quad \cdots (2)$$

where X is $NH_3$, a halogen ion, CN, pyridine, nicoti-

namide, or $H_2O$, and n+ is the valence of an oxidized Ru(III) complex determined by a type of X.

14. The thin analysis tool (1) according to Claim 1, wherein the sample liquid is a biochemical sample such as blood, urine, saliva, or a preparation thereof, the tool (1) being constituted for performing analysis of glucose, cholesterol, lactic acid, or ascorbic acid.

**Patentansprüche**

1. Dünnes Analysewerkzeug (1) mit:

einem Reaktionsraum (6) zum Halten einer Probenflüssigkeit, wobei der Reaktionsraum (6) mit einem Reagenzabschnitt (33) bereitgestellt ist, der sich auflöst, wenn die Probenflüssigkeit in dem Raum (6) gehalten wird, und wobei ein Teil des Reaktionsraums (6) durch sich zugewandte erste und zweite Flächen (31c, 5a) definiert ist, wobei die erste und die zweite Fläche (31c, 5a) voneinander durch einen gegenseitigen Abstand (H1) beabstandet sind, der nicht größer als 45 μm ist;
einer ersten und zweiten Platte (3, 5) die einander zugewandt und getrennt voneinander angeordnet sind, um den Reaktionsraum (6) zu definieren, wobei sich die erste und zweite Fläche (31c, 5a) in einer zu einer Dikkenrichtung der ersten und zweiten Platte (3, 5) senkrechten Richtung erstrecken; und
einer ersten Elektrode (31''), die auf der ersten Platte (3'') bereitgestellt ist, und einer zweiten Elektrode (32''), die auf der zweiten Platte (5'') bereitgestellt ist, um der ersten Elektrode (31'') zugewandt zu sein, wobei die zweite Elektrode (32'') mit der ersten Elektrode (31'') zum Aufbringen einer Spannung auf die Probenflüssigkeit zusammenwirkt und der gegenseitige Abstand (H'') ein minimaler Abstand zwischen der ersten Elektrode (31'') und der zweiten Elektrode (32'') ist.

2. Dünnes Analysewerkzeug (1) nach Anspruch 1, bei dem der gegenseitige Abstand (H'') zwischen 25 und 45 μm ist.

3. Dünnes Analysewerkzeug (1) nach Anspruch 1, bei dem der Reaktionsraum (6) so ausgebildet ist, dass die Probe durch Kapillarkräfte bewegt wird.

4. Dünnes Analysewerkzeug (1) nach Anspruch 1, bei dem der Reagenzabschnitt (33) einen Elektronenmediator und ein Redox-Enzym aufweist.

5. Dünnes Analysewerkzeug (1) nach Anspruch 4, bei dem der Elektronenmediator eine Rutheniumverbindung ist.

6. Dünnes Analysewerkzeug (1) nach Anspruch 5, bei dem die Rutheniumverbindung durch die folgende chemische Formel (1) ausgedrückt wird:

$$[\mathrm{Ru(NH_3)_5X}]^{n+} \quad \cdots \quad (1)$$

wobei X $NH_3$, ein Halogenion, CN, Pyridin, Nicotinamid or $H_2O$ ist und n+ ist die Valenz eines oxidierten Ru(III)-Komplexes, die durch die Art von X bestimmt wird.

7. Dünnes Analysewerkzeug (1) nach Anspruch 6, bei dem X in der chemischen Formel 1 $NH_3$ oder ein Halogenion ist.

8. Dünnes Analysewerkzeug (1) nach Anspruch 4, bei dem das Redox-Enzym eine Glucose-Dehydrierungsaktivität aufweist.

9. Dünnes Analysewerkzeug (1) nach Anspruch 8, bei dem das Redox-Enzym ein Glucose-Dehydrierungsenzym ist, das aus Mikroorganismen der Gattung Burkholderia stammt.

10. Dünnes Analysewerkzeug (1) nach Anspruch 9, bei dem das Redox-Enzym eine Alpha-Untereinheit aufweist, die eine Glucose-Dehydrierungsaktivität aufweist und deren Molekulargewicht in etwa 60 kDa beträgt, und zwar gemessen durch SDS-Polyacrylamid-Gelelektrophorese im reduktiven Zustand.

11. Dünnes Analysewerkzeug (1) nach Anspruch 10, bei dem das Redox-Enzym ein Zytochrom C aufweist, dessen Molekulargewicht in etwa 43 kDa gemessen durch SDS-Polyacrylamid-Gelelektrophorese im reduktiven Zustand beträgt.

12. Dünnes Analysewerkzeug (1) nach Anspruch 4, bei dem der Elektronenmediator eine Rutheniumverbindung ist, und wobei das Redox-Enzym ein Glucose-Dehydrierungsenzym ist, das aus Mikroorganismen der Gattung Burkholderia stammt.

13. Dünnes Analysewerkzeug (1) nach Anspruch 12, bei dem die Rutheniumverbindung durch die folgende chemische Formel (2) ausgedrückt wird, wobei das Redox-Enzym aufweist: eine Alpha-Untereinheit, die eine Glucose-Dehydrierungsaktivität aufweist und deren Molekulargewicht in etwa 60 kDa beträgt, und zwar gemessen durch SDS-Polyacrylamid-Gelelektrophorese im reduktiven Zustand; und ein Zytochrom C, dessen Molekulargewicht in etwa 43 kDa gemessen durch SDS-Polyacrylamid-Gelelektrophorese im reduktiven Zustand beträgt;

$$[\mathrm{Ru(NH_3)_5X}]^{n+} \quad \cdots \quad (2)$$

wobei X $NH_3$, ein Halogenion, CN, Pyridin, Nicotinamid or $H_2O$ ist und n+ ist die Valenz eines oxidierten Ru(III)-Komplexes, die durch die Art von X bestimmt wird.

14. Dünnes Analysewerkzeug (1) nach Anspruch 1, bei dem die Probenflüssigkeit eine biochemische Probe, wie zum Beispiel Blut, Urin, Speichel oder eine Aufbereitung daraus ist, wobei das Werkzeug (1) zum Ausführen einer Analyse von Glukose, Cholesterin, Milchsäure oder Ascorbinsäure ausgebildet ist.

**Revendications**

1. Outil d'analyse mince (1) comprenant :

   un espace de réaction (6) destiné à contenir un liquide d'échantillon, dans lequel l'espace de réaction (6) est muni d'une portion de réactif (33) qui se dissout lorsque le liquide d'échantillon est maintenu dans l'espace (6), et dans lequel une partie de l'espace de réaction (6) est définie par des première et seconde surfaces (31 c, 5a) se faisant mutuellement face, la première et la seconde surfaces (31 c, 5a) étant espacées l'une de l'autre d'une distance de séparation (H1) qui n'est pas supérieure à 45 µm,
   des première et seconde plaques (3, 5) se faisant mutuellement face et espacées l'une de l'autre pour définir l'espace de réaction (6), dans lequel les première et seconde surfaces (31c, 5a) s'étendent dans une direction perpendiculaire à une direction d'épaisseur des première et seconde plaques (3, 5), et
   une première électrode (31") disposée sur la première plaque (3"), et une seconde électrode (32") disposée sur la seconde plaque (5") de manière à faire face à la première électrode (31"), la seconde électrode (32") coopérant avec la première électrode (31") pour appliquer une tension au liquide d'échantillon, dans lequel la distance de séparation (H") est une distance minimum entre la première électrode (31") et la seconde électrode (32").

2. Outil d'analyse mince (1) selon la revendication 1, dans lequel la distance de séparation (H") est comprise entre 25 et 45 µm.

3. Outil d'analyse mince (1) selon la revendication 1, dans lequel l'espace de réaction (6) est constitué de sorte que l'échantillon est déplacé par une force capillaire.

4. Outil d'analyse mince (1) selon la revendication 1, dans lequel la portion de réactif (33) comprend un médiateur d'électrons et une enzyme d'oxydo-réduction.

5. Outil d'analyse mince (1) selon la revendication 4, dans lequel le médiateur d'électrons est un composé de ruthénium.

6. Outil d'analyse mince (1) selon la revendication 5, dans lequel le composé de ruthénium est représenté par la formule chimique suivante (1) :

$$[Ru(NH_3)_5X]^{n+} \dots(1)$$

où X est $NH_3$, un ion halogène, CN, pyridine, nicotinamide, ou $H_2O$ et n+ est la valence d'un complexe Ru oxydé (III) déterminé par un type de X.

7. Outil d'analyse mince (1) selon la revendication 6, dans lequel X dans la formule chimique 1 est $NH_3$ ou un ion halogène.

8. Outil d'analyse mince (1) selon la revendication 4, dans lequel l'enzyme d'oxydoréduction a une activité de déshydrogénation du glucose.

9. Outil d'analyse mince (1) selon la revendication 8, dans lequel l'enzyme d'oxydoréduction est une enzyme de déshydrogénation du glucose provenant de microbes appartenant au genre Burkholderia.

10. Outil d'analyse mince (1) selon la revendication 9, dans lequel l'enzyme d'oxydoréduction a une sous-unité alpha qui possède une activité de déshydrogénation du glucose et dont le poids moléculaire est d'environ 60 kDa tel que mesuré par une électrophorèse sur gel de polyacrylamide-SDS dans des conditions réductrices.

11. Outil d'analyse mince (1) selon la revendication 10, dans lequel l'enzyme d'oxydoréduction a un cytochrome C dont le poids moléculaire est d'environ 43 kDa tel que mesuré par une électrophorèse sur gel de polyacrylamide-SDS dans des conditions réductrices.

12. Outil d'analyse mince (1) selon la revendication 4, dans lequel le médiateur d'électrons est un composé du ruthénium, et
dans lequel l'enzyme d'oxydo-réduction est une enzyme de déshydrogénation du glucose provenant de microbes appartenant au genre Burkholderia.

13. Outil d'analyse mince (1) selon la revendication 12, dans lequel le composé du ruthénium est représenté par la formule chimique suivante (2),
l'enzyme d'oxydo-réduction comprenant : une sous-unité alpha qui a une activité de déshydrogénation du glucose et dont le poids moléculaire est d'environ 60 kDa tel que mesuré par une électrophorèse sur gel de polyacrylamide-SDS dans des conditions réductrices, et un cytochrome C dont le poids moléculaire est d'environ 43 kDa tel que mesuré par une électrophorèse sur gel de polyacrylamide-SDS dans des conditions réductrices,

$$[Ru(NH_3)_5X]^{n+} \dots(2)$$

où X est $NH_3$, un ion halogène, CN, pyridine, nicotinamide, ou $H_2O$, et n+ est la valence d'un complexe Ru oxydé (III) déterminé par un type de X.

14. Outil d'analyse mince (1) selon la revendication 1, dans lequel le liquide d'échantillon est un échantillon biochimique tel que le sang, l'urine, la salive, ou une préparation de ceux-ci, l'outil (1) étant constitué pour effectuer une analyse du glucose, du cholestérol, de l'acide lactique, ou de l'acide ascorbique.

## FIG.1

EP 1 577 665 B1

FIG.2

# FIG.3

# FIG.4

EP 1 577 665 B1

# FIG.5A

# FIG.5B

## FIG. 6A

## FIG. 6B

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20020092612 A
- EP 1256798 A1
- EP 1522592 A1
- EP 1557663 A1
- WO 0236779 A